# EUROPEAN PATENT APPLICATION

(11) **EP 4 800 557 A1**
(43) Date of publication of application: **02.09.2026**
(21) Application number: 24890363.5
(22) Date of filing: 30.09.2024
(51) Int. Cl.: G06F 9/54

(54) **ACCESS METHOD FOR SHARED MEMORY AND RELATED APPARATUS**

(30) Priority: 14.11.2023 CN 202311519242
(71) Applicant: HUAWEI TECHNOLOGIES CO., LTD., Shenzhen 518129 (CN)
(72) Inventor: ZHU, Yan, Shenzhen, Guangdong 518129 (CN); ZHONG, Jubin, Shenzhen, Guangdong 518129 (CN); WANG, Xu, Shenzhen, Guangdong 518129 (CN); ZHANG, Zhou, Shenzhen, Guangdong 518129 (CN)
(74) Representative: Maiwald GmbH
(86) International application number: PCT/CN2024/122600
(87) International publication number: WO 2025/103005

(57) **Abstract**

A shared memory access method is applied to implement access to a shared memory in an electronic device. In the method, the shared memory is divided into a plurality of memory segments corresponding to different permissions, and different permissions are granted to different processes, so that a process with a high permission can normally access a memory segment corresponding to a high permission or a low permission, and when a process with a low permission accesses a memory segment corresponding to a high permission, security detection needs to be performed, thereby ensuring security of data in the shared memory and improving process running reliability. In addition, because the security detection does not need to be performed when the process with the high permission accesses the memory segment of the low permission, the security detection needs to be performed only when the process with the low permission accesses the memory segment of the high permission, thereby greatly reducing security detection that needs to be performed when a process accesses a memory across permissions, and improving inter-process communication efficiency.

## Description

This application claims priority to Chinese Patent Application No. 202311519242.7, filed with the China National Intellectual Property Administration on November 14, 2023 and entitled "SHARED MEMORY ACCESS METHOD AND RELATED APPARATUS", which is incorporated herein by reference in its entirety.

### TECHNICAL FIELD

This application relates to the field of computer technologies, and in particular, to a shared memory access method and a related apparatus.

### BACKGROUND

As a communication manner with the highest inter-process communication efficiency, a shared memory is widely used in complex service scenarios (for example, a database scenario or an enterprise resource planning (Enterprise Resource Planning, ERP) scenario) in the information and communication technology (Information and communication technology, ICT) field. For a plurality of processes that share a same shared memory, data written by any process into the shared memory can be quickly accessed by a plurality of the other processes, thereby implementing efficient inter-process communication.

Generally, to facilitate management and improve efficiency, a shared memory management component usually applies to an operating system for a large shared memory in advance, and then performs secondary management and allocation. This reduces performance impact caused by service processes being trapped in kernel mode when the service processes frequently request and release the shared memory.

However, a manner of uniformly applying for a shared memory for different service processes introduces certain security risks. To be specific, because the entire shared memory is accessible to all service processes, unintended or malicious data modification between service processes is likely to occur, resulting in runtime errors or even crashes of the service processes.

### SUMMARY

This application provides a shared memory access method, to ensure security of data in a shared memory and improve process running reliability.

A first aspect of this application provides a shared memory access method, applied to implement access to a shared memory in an electronic device. The method includes: First, when a first process and a second process access a shared memory, obtaining a first access request from the first process and a second access request from the second process, where the first access request is used to request to access a first address in the shared memory, and the second access request is used to request to access a second address in the shared memory. The shared memory that the first process and the second process request to access includes a plurality of memory segments, and the plurality of memory segments respectively correspond to different access permissions. For example, the plurality of memory segments include a first memory segment and a second memory segment, an access permission corresponding to the first memory segment is a low permission, and an access permission corresponding to the second memory segment is a high permission.

Then, in response to an access permission of the first process being not lower than an access permission corresponding to a memory segment to which the first address belongs, executing the first access request. Specifically, a corresponding access permission is also configured for a process that can access the shared memory and that runs on the electronic device, to indicate a memory segment that is in the shared memory and that can be normally accessed by the process. Because the access permission configured for the first process (that is, the access permission of the first process) is not lower than the access permission corresponding to the memory segment to which the first address that the first process requests to access belongs, it may be determined that the first process can normally access the first address in the shared memory, to execute the first access request.

In addition, in response to an access permission of the second process being lower than an access permission corresponding to a memory segment to which the second address belongs, determining that the second process does not have the permission to normally access the second address, and further performing security detection on the second access request, to trigger execution of the second access request when the security detection on the second access request succeeds.

In the solution, the shared memory is divided into a plurality of memory segments corresponding to different permissions, and different permissions are granted to different processes, so that a process with a high permission can normally access a memory segment corresponding to a high permission or a low permission, and when a process with a low permission accesses a memory segment corresponding to a high permission, security detection needs to be performed, thereby ensuring security of data in the shared memory and improving process running reliability. In addition, because the security detection does not need to be performed when the process with the high permission accesses the memory segment of the low permission, the security detection needs to be performed only when the process with the low permission accesses the memory segment of the high permission, thereby greatly reducing security detection that needs to be performed when a process accesses a memory across permissions, and improving inter-process communication efficiency.

In a possible implementation, the access permission of the first process is the same as the access permission corresponding to the memory segment to which the second address belongs. For example, both the access permission of the first process and the access permission corresponding to the memory segment to which the second address belongs are high permissions. The access permission of the second process is the same as the access permission corresponding to the memory segment to which the first address belongs. For example, both the access permission of the second process and the access permission corresponding to the memory segment to which the first address belongs are low permissions. In addition, the access permission of the first process is higher than the access permission of the second process.

That is, both the first process and the memory segment to which the second address belongs correspond to high permissions, and the second process and the memory segment to which the first address belongs correspond to low permissions. In this way, when the first process with the high permission accesses the first address corresponding to the low permission, even if the permission corresponding to the first address is not the same as the permission of the first process, the first process can normally access the first address, and does not need to undergo security detection, thereby reducing a quantity of times of performing security detection performed when a process accesses the shared memory cross permissions, and improving inter-process communication efficiency. When the second process with the low permission accesses the second address corresponding to the high permission, security detection needs to be performed on an access request of the second process, to avoid an illegal tampering behavior on the shared memory, ensure security of data in the shared memory, and improve process running reliability.

In a possible implementation, the method further includes: obtaining a third access request from the second process, where the third access request is used to request the first address in the shared memory; and executing the third access request in response to the access permission of the second process being not lower than the access permission corresponding to the memory segment to which the first address belongs.

In a possible implementation, after any one of the first access request and the second access request is obtained, a mapping relationship is obtained, where the mapping relationship indicates a correspondence between a process and a memory segment in the shared memory. A target memory segment corresponding to a target process includes one or more memory segments whose corresponding access permission is not higher than an access permission of the target process, and the target process is any process recorded in the mapping relationship. That is, the mapping relationship indicates correspondences between various processes that have been created in the electronic device and memory segments, and a memory segment corresponding to each process is a memory segment that can be normally accessed by the process. For any process, if the mapping relationship indicates that there is a correspondence between the process and a memory segment, it indicates that an access permission of the process is not lower than an access permission corresponding to the memory segment. Therefore, the process can normally access the memory segment, and does not need to undergo security detection.

After the mapping relationship is obtained, it may be determined, based on the mapping relationship, that the access permission of the first process is not lower than the access permission corresponding to the memory segment to which the first address belongs and that the access permission of the second process is lower than the access permission corresponding to the memory segment to which the second address belongs.

In this solution, the correspondence between the process and the memory segment is indicated by the mapping relationship, so that a level between the access permission of the process and the access permission corresponding to the memory segment can be quickly learned by querying the mapping relationship, to determine whether security detection needs to be performed on the access request of the process, thereby improving processing efficiency of the access request of the process.

In a possible implementation, in the mapping relationship, a correspondence between the target process and the target memory segment is generated when the target process is created. That is, during running of the electronic device, each time the electronic device creates a process that needs to use the shared memory, a correspondence between the process and a memory segment is generated, so that a memory segment that is in the shared memory and that can be normally accessed by each process can be quickly determined subsequently.

In a possible implementation, because a memory address to which the process is oriented is usually a virtual address, the foregoing mapping relationship may be specifically used to record a correspondence between a process and a virtual address segment, and there is a correspondence between the recorded virtual address segment and a memory segment in the shared memory.

Because an address in an access request obtained from the process is the virtual address, in this solution, the correspondence between the virtual address segment and the memory segment in the shared memory is recorded in the mapping relationship, so that whether security detection needs to be performed on the access request of the process can be quickly determined based on the virtual address obtained from the access request, thereby improving efficiency of determining whether the security detection needs to be performed on the access request.

In a possible implementation, the foregoing mapping relationship is recorded in a page table, that is, the mapping relationship is stored in the memory as a part of the page table. The page table is used to record a correspondence between a virtual address and a physical address in the shared memory.

In a procedure of executing the access request, the page table needs to be queried to obtain the physical address corresponding to the virtual address in the access request. Therefore, the mapping relationship is recorded in the page table, and two types of information can be obtained by querying the page table once, that is, the physical address corresponding to the virtual address and whether the process has a permission to normally access the physical address corresponding to the virtual address, thereby improving efficiency of accessing the shared memory by the process.

In a possible implementation, a target function may be preconfigured in an operating system. When the security detection needs to be performed on the second access request, the target function is invoked to perform the security detection on the second access request. In this way, after the security detection of the target function on the second access request succeeds, the second process may switch to a security domain with a higher access permission, so that the second address with the high access permission can be accessed. The target function may be pre-written by an administrator and configured in the operating system, so that the security detection can be performed on the access request according to various detection strategies, thereby implementing security detection at a finer granularity. For example, the target function may specifically determine whether the second access request is valid based on a fine-grained component, for example, a thread or a coroutine, in the second process, from which the second access request comes and an operation (for example, a data read operation or a data write operation) that is carried in the second access request and that is performed on the accessed second address.

In a possible implementation, when the security detection on the second access request succeeds, execution of the second access request is triggered.

Alternatively, when the security detection on the second access request fails, execution of the second access request is rejected.

A second aspect of this application provides a shared memory access apparatus, including: an obtaining module, configured to obtain a first access request from a first process and a second access request from a second process, where the first access request is used to request to access a first address in a shared memory, the second access request is used to request to access a second address in the shared memory, the shared memory includes a plurality of memory segments, and the plurality of memory segments respectively correspond to different access permissions; and a processing module, configured to execute the first access request in response to an access permission of the first process being not lower than an access permission corresponding to a memory segment to which the first address belongs; and the processing module is further configured to perform security detection on the second access request in response to an access permission of the second process being lower than an access permission corresponding to a memory segment to which the second address belongs, to trigger execution of the second access request when the security detection on the second access request succeeds.

In a possible implementation, the access permission of the first process is the same as the access permission corresponding to the memory segment to which the second address belongs, the access permission of the second process is the same as the access permission corresponding to the memory segment to which the first address belongs, and the access permission of the first process is higher than the access permission of the second process.

In a possible implementation, the obtaining module is further configured to obtain a third access request from the second process, where the third access request is used to request the first address in the shared memory; and the processing module is further configured to execute the third access request in response to the access permission of the second process being not lower than the access permission corresponding to the memory segment to which the first address belongs.

In a possible implementation, the obtaining module is further configured to obtain a mapping relationship, where the mapping relationship indicates a correspondence between a process and a memory segment in the shared memory, a target memory segment corresponding to a target process includes one or more memory segments whose corresponding access permission is not higher than an access permission of the target process, and the target process is any process recorded in the mapping relationship; and the processing module is further configured to determine, based on the mapping relationship, that the access permission of the first process is not lower than the access permission corresponding to the memory segment to which the first address belongs and that the access permission of the second process is lower than the access permission corresponding to the memory segment to which the second address belongs.

In a possible implementation, in the mapping relationship, a correspondence between the target process and the target memory segment is generated when the target process is created.

In a possible implementation, the mapping relationship is specifically used to record a correspondence between a process and a virtual address segment, and there is a correspondence between the virtual address segment and a memory segment in the shared memory.

In a possible implementation, the mapping relationship is recorded in a page table, and the page table is used to record a correspondence between a virtual address and a physical address in the shared memory.

In a possible implementation, the processing module is further configured to invoke a target function to perform the security detection on the second access request, where the target function is a preset function.

In a possible implementation, the processing module is further configured to: when the security detection on the second access request succeeds, trigger execution of the second access request; or when the security detection on the second access request fails, reject execution of the second access request.

A third aspect of this application provides a shared memory access apparatus. The apparatus may include a processor, the processor is coupled to a memory, the memory stores program instructions, and when the program instructions stored in the memory are executed by the processor, the method according to the first aspect or any one of the implementations of the first aspect is implemented. For details of steps that are performed by the processor and that are in the possible implementations of the first aspect, refer to the first aspect. Details are not described herein again.

A fourth aspect of this application provides a computer-readable storage medium. The computer-readable storage medium stores a computer program, and when the computer program is run on a computer, the computer is enabled to perform the method according to any one of the implementations of the first aspect.

A fifth aspect of this application provides a circuit system. The circuit system includes a processing circuit. The processing circuit is configured to perform the method according to any one of the implementations of the first aspect.

A sixth aspect of this application provides a computer program product. When the computer program product runs on a computer, the computer is enabled to perform the method according to any one of the implementations of the first aspect.

A seventh aspect of this application provides a chip system. The chip system includes a processor, configured to support a server or a feature selection apparatus in implementing a function in any one of the implementations of the first aspect, for example, processing data and/or information in the foregoing method. In a possible design, the chip system further includes a memory, and the memory is configured to store program instructions and data that are necessary for a server or a feature selection apparatus. The chip system may include a chip, or may include a chip and another discrete component.

For beneficial effect of the second aspect to the seventh aspect, refer to the descriptions of the first aspect. Details are not described herein again.

### BRIEF DESCRIPTION OF DRAWINGS

FIG. 1 is a diagram of isolation domain switching according to an embodiment of this application;
FIG. 2 is a diagram of a structure of an electronic device 101 according to an embodiment of this application;
FIG. 3 shows a shared memory access method according to an embodiment of this application;
FIG. 4 is a diagram in which different processes access a shared memory according to an embodiment of this application;
FIG. 5 is a diagram of configuring access permissions for different memory segments in a shared memory in a scenario according to an embodiment of this application;
FIG. 6 is a diagram of configuring access permissions for different memory segments in a shared memory in another scenario according to an embodiment of this application;
FIG. 7 is a diagram of a memory segment in a shared memory according to an embodiment of this application;
FIG. 8 is a diagram of establishing a correspondence between a process and a virtual address segment according to an embodiment of this application;
FIG. 9 is a diagram of a structure of a shared memory access apparatus according to an embodiment of this application;
FIG. 10 is a diagram of a structure of an electronic device according to an embodiment of this application; and
FIG. 11 is a diagram of a structure of a computer-readable storage medium according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein.

In addition, the terms "include" and "have" and any other variants are intended to cover the non-exclusive inclusion. For example, a procedure, method, system, product, or device that includes a list of steps or units is not necessarily limited to those expressly listed steps or units, but may include other steps or units not expressly listed or inherent to such a procedure, method, product, or device.

For ease of understanding, the following first describes some technical terms used in embodiments of this application.

### (1) Shared memory (shared memory)

A shared memory is a large-capacity memory that can be accessed by different central processing units (Central Processing Unit, CPU) in a multiprocessor computer system. Generally, the shared memory is usually used for communication between a plurality of processes, and is a fastest manner for implementing inter-process communication. Specifically, after one process writes data into the shared memory, another process that shares the shared memory can immediately see the data written into the shared memory.

### (2) Process

A process (Process) is a running activity performed regarding a dataset by a program in a computer, is a base unit for performing resource allocation by a system, and is a structural basis of an operating system. In an early process-oriented computer architecture, the process is a basic execution entity of a program. In a modern thread-oriented computer architecture, the process is a container for threads. The program is a description of an instruction, data, and an organizational form thereof. The process is a program entity.

### (3) Thread

A thread (English: thread) is a minimum unit for an operating system to perform computing and scheduling. The thread is included in a process and is an actual operating unit of the process. One thread is one single sequential control flow in a process. One process may have a plurality of concurrent threads, and the threads execute different tasks in parallel.

### (4) Subroutine

In computer science, a subroutine is also called a subprogram, which is a part of code in a large program and includes one or more statement blocks. The subroutine is responsible for completing a specific task. Compared with another code, the subroutine is relatively independent.

### (5) Coroutine

A coroutine is similar to a subroutine, and the coroutine is also a program component. Compared with the subroutine, the coroutine is more general and flexible, but is not widely used in practice.

### (6) Register

A register is a high-speed storage component with a limited storage capacity in a CPU. Simply speaking, the register is some small storage areas used to store data in the CPU and is used to temporarily store data and a calculation result involved in calculation. Compared with a memory in a computer, the register has a very high read and write speed, so the data transfer between registers is very fast.

### (7) Virtual address (Virtual address, VA)

A virtual address is an address of a storage unit that is seen from a perspective of an application in a computer architecture. The virtual address is usually different from a physical address of the storage unit. An address translator is required to translate the virtual address into the physical address (Physical Address, PA).

Simply speaking, the virtual address is usually an address generated by a CPU in a computer when an application runs, and the physical address is a real address in a physical memory.

### (8) Page table

A page table is a special data structure used to record a mapping relationship between a virtual address and a physical address. Generally, in a computer, a memory management unit (Memory Management Unit, MMU) may implement translation between the virtual address and the physical address by querying the page table.

### (9) Application programming interface (English: Application Programming Interface, API)

APIs are essentially some predefined functions (that is, a function set) that are used by applications or developers to access a group of routines based on specific software or hardware without a need to access a source code or understand an internal working mechanism.

In a related technology, a manner of uniformly applying for a shared memory for different service processes introduces certain security risks. To be specific, because the entire shared memory is accessible to all service processes, unintended or malicious data modification between service processes is likely to occur, resulting in runtime errors or even crashes of the service processes.

To implement inter-process isolation, a possible manner is to divide the entire shared memory into a plurality of isolation domains, and different isolation domains correspond to different processes. For any process, the process can normally access data in an isolation domain corresponding to the process. However, when the process accesses data in another isolation domain, the process can access the data only after specific security detection succeeds.

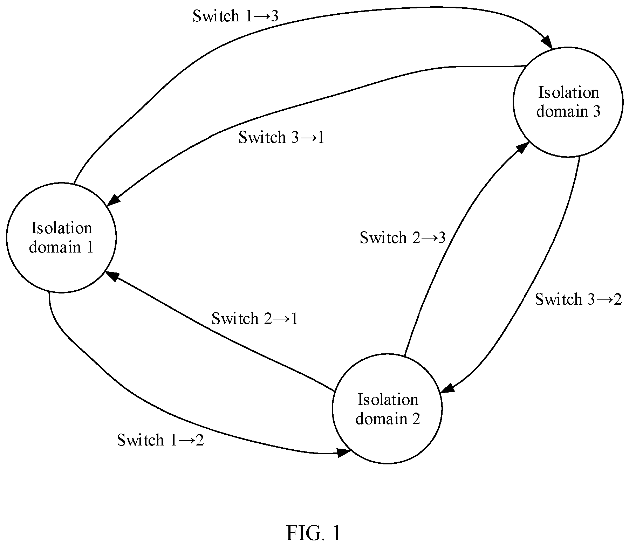

For example, FIG. 1 is a diagram of isolation domain switching according to an embodiment of this application. As shown in FIG. 1, it is assumed that a shared memory is divided into an isolation domain 1, an isolation domain 2, and an isolation domain 3, and each isolation domain has a corresponding process. In this way, when a process corresponding to any isolation domain needs to access data in another isolation domain, isolation domain switching needs to be performed, that is, security detection is performed on behavior of the process accessing the another isolation domain, thereby generating high isolation domain switching costs and reducing inter-process communication efficiency. Specifically, when a process corresponding to the isolation domain 1 accesses data in the isolation domain 3, switching from the isolation domain 1 to the isolation domain 3 occurs, that is, all access requests sent by the process corresponding to the isolation domain 1 for the isolation domain 3 need to undergo security detection. Similarly, when a process corresponding to the isolation domain 3 accesses data in the isolation domain 1, switching from the isolation domain 3 to the isolation domain 1 occurs, that is, all access requests sent by the process corresponding to the isolation domain 3 for the isolation domain 1 also need to undergo security detection.

Based on this, this application provides a shared memory access method. In the solution, the shared memory is divided into a plurality of memory segments corresponding to different permissions, and different permissions are granted to different processes, so that a process with a high permission can normally access a memory segment corresponding to a high permission or a low permission, and when a process with a low permission accesses a memory segment corresponding to a high permission, security detection needs to be performed, thereby ensuring security of data in the shared memory and improving process running reliability. In addition, because the security detection does not need to be performed when the process with the high permission accesses the memory segment of the low permission, the security detection needs to be performed only when the process with the low permission accesses the memory segment of the high permission, thereby greatly reducing security detection that needs to be performed when a process accesses a memory across permissions, and improving inter-process communication efficiency.

For ease of understanding, the following describes a device to which the shared memory access method provided in embodiments of this application is applied.

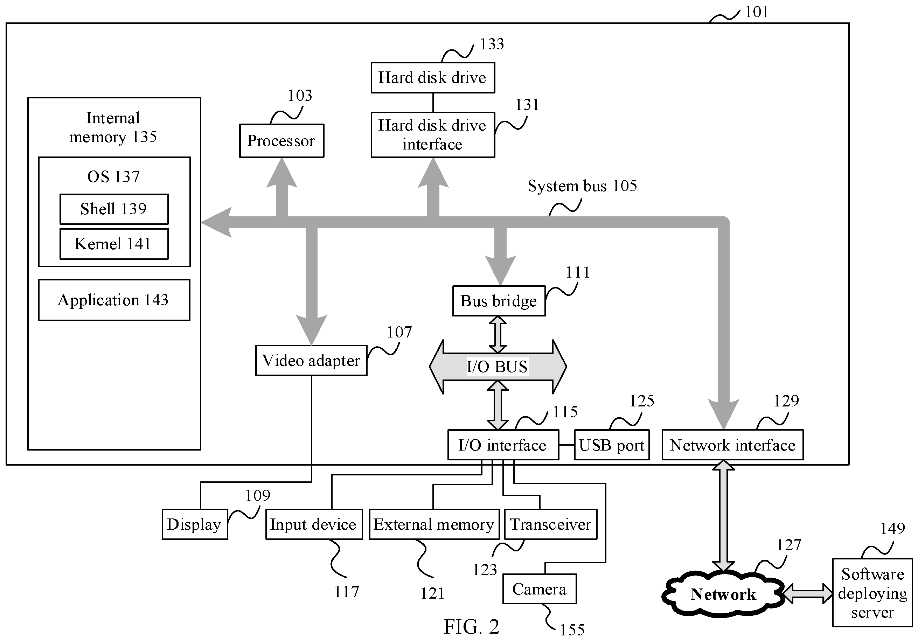

FIG. 2 is a diagram of a structure of an electronic device 101 according to an embodiment of this application. As shown in FIG. 2, the electronic device 101 to which a shared memory access method provided in an embodiment of this application is applied includes a processor 103, and the processor 103 is coupled to a system bus 105. The processor 103 may be one or more processors, and each processor may include one or more processor cores. A video adapter (video adapter) 107 is further included, and the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set computing, RISC) processor, a complex instruction set computing (complex instruction set computing, CISC) processor, or a combination thereof. Optionally, the processor may be a dedicated apparatus such as an ASIC.

The electronic device 101 may communicate with a software deploying server 149 through a network interface 129. For example, the network interface 129 is a hardware network interface, for example, a network interface card. A network 127 may be an external network such as the internet, or an internal network such as the Ethernet or a virtual private network (virtual private network, VPN). Optionally, the network 127 may alternatively be a wireless network, for example, a Wi-Fi network, a cellular network, or the like.

The hard disk drive interface 131 is coupled to the system bus 105. A hardware drive interface is connected to the hard disk drive 133. An internal memory 135 is coupled to the system bus 105. Data running in the internal memory 135 may include an operating system (OS) 137, an application 143, and a schedule table of the electronic device 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes parts that are in the operating system and that are used to manage a memory, a file, a peripheral, and a system resource. The kernel 141 directly interacts with hardware, the kernel of the operating system usually runs a process, provides inter-process communication, and provides functions such as CPU time slice management, interrupt, memory management, and I/O management.

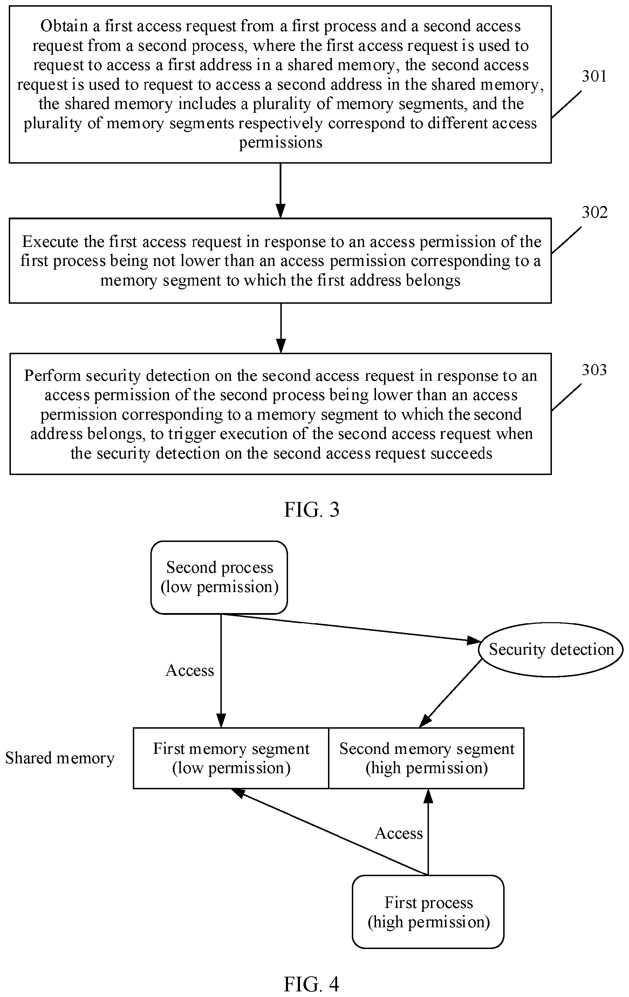

For example, FIG. 3 shows a shared memory access method according to an embodiment of this application. As shown in FIG. 3, the shared memory access method provided in this embodiment includes the following steps 301 to 303. In addition, the shared memory access method provided in this embodiment may be applied to an electronic device including a shared memory, and may be specifically applied to an operating system of the electronic device or a software component in an operating system.

Step 301: Obtain a first access request from a first process and a second access request from a second process, where the first access request is used to request to access a first address in a shared memory, the second access request is used to request to access a second address in the shared memory, the shared memory includes a plurality of memory segments, and the plurality of memory segments respectively correspond to different access permissions.

In this embodiment, when a process needs to access data in the shared memory, the process generates a corresponding access request to request to access the data in the shared memory. Specifically, after the first process generates the first access request and the second process generates the second access request, the operating system in the electronic device may obtain the first access request and the second access request. The operating system may first obtain the first access request, and then obtain the second access request; or the operating system may first obtain the second access request, and then obtain the first access request. A sequence of obtaining the first access request and the second access request is not limited in this embodiment.

For the first access request and the second access request, both the first access request and the second access request are used to request to access addresses in the shared memory, and the first access request and the second access request are used to request to access different addresses, that is, the first address and the second address are different. In addition, the shared memory is pre-divided into a plurality of memory segments (for example, two or more memory segments), each memory segment in the plurality of memory segments corresponds to a unique access permission, and different memory segments in the plurality of memory segments correspond to different access permissions. For example, the plurality of memory segments include a first memory segment and a second memory segment, an access permission corresponding to the first memory segment is a low permission, and an access permission corresponding to the second memory segment is a high permission.

It should be noted that, for any one of the plurality of memory segments, the memory segment may include one or more segments of contiguous memory addresses. When the memory segment includes the one segment of contiguous memory addresses, memory addresses included in the memory segment are contiguous; or when the memory segment includes the plurality of segments of contiguous memory addresses, the plurality of segments of memory addresses are separated, that is, memory addresses included in the memory segment are not completely contiguous.

Step 302: Execute the first access request in response to an access permission of the first process being not lower than an access permission corresponding to a memory segment to which the first address belongs.

In this embodiment, a corresponding access permission is also configured for a process that can access the shared memory and that runs on the electronic device, to indicate a memory segment that is in the shared memory and that can be normally accessed by the process. Specifically, in this embodiment, the access permission configured for the first process (that is, the access permission of the first process) is not lower than the access permission corresponding to the memory segment to which the first address that the first process requests to access belongs. Therefore, it may be determined that the first process can normally access the first address in the shared memory, to execute the first access request.

For example, the access permission of the first process is a high permission, and the access permission corresponding to the memory segment to which the first address belongs is a low permission. Because the access permission of the first process is higher than the access permission corresponding to the memory segment to which the first address belongs, it indicates that the first process has a permission to normally access the first address. Therefore, the first access request can be executed.

The first access request may further carry an operation performed on the accessed first address, for example, a data read operation or a data write operation. In a procedure of executing the first access request, specifically, data in the first address may be read or new data may be written into the first address according to an indication of the first access request.

Step 303: Perform security detection on the second access request in response to an access permission of the second process being lower than an access permission corresponding to a memory segment to which the second address belongs, to trigger execution of the second access request when the security detection on the second access request succeeds.

In this embodiment, the access permission configured for the second process is lower than the access permission corresponding to the memory segment to which the second address that the second process requests to access belongs. Therefore, it may be determined that the second process does not have a permission to normally access the second address, and the security detection performed on the second access request is triggered. In this way, execution of the second access request is triggered only when the security detection on the second access request succeeds. When the security detection on the second access request fails, execution of the second access request is rejected.

That is, when a process with a high permission requests to access an address in a memory segment of a same permission or a lower permission, the process can normally access the address in the memory segment. When a process with a low permission requests to access an address in a memory segment of a high permission, the process cannot normally access the address in the memory segment, but needs to first undergo security detection to determine whether access behavior of the process is secure, so as to determine whether to allow execution of the access behavior of the process.

In the solution, the shared memory is divided into a plurality of memory segments corresponding to different permissions, and different permissions are granted to different processes, so that a process with a high permission can normally access a memory segment corresponding to a high permission or a low permission, and when a process with a low permission accesses a memory segment corresponding to a high permission, security detection needs to be performed, thereby ensuring security of data in the shared memory and improving process running reliability. In addition, because the security detection does not need to be performed when the process with the high permission accesses the memory segment of the low permission, the security detection needs to be performed only when the process with the low permission accesses the memory segment of the high permission, thereby greatly reducing security detection that needs to be performed when a process accesses a memory across permissions, and improving inter-process communication efficiency.

Performing the security detection on the second access request may be specifically detecting validity of the second access request according to a preconfigured detection strategy, to determine whether execution of the second access request causes negative impact on the shared memory. For example, a procedure of detecting the second access request according to the preconfigured detection strategy may be specifically determining, based on a source of the second access request (for example, a component, for example, a thread or a coroutine, in the second process, from which the second access request comes) and an operation (for example, a data read operation or a data write operation) that is carried in the second access request and that is performed on the accessed second address, whether the second access request is valid.

In a possible implementation, a target function may be preconfigured in an operating system. When the security detection needs to be performed on the second access request, the target function is invoked to perform the security detection on the second access request. In this way, after the security detection of the target function on the second access request succeeds, the second process may switch to a security domain with a higher access permission, so that the second address with the high access permission can be accessed. The target function may be implemented in a plurality of manners. For example, the target function may be an application programming interface (Application Programming Interface, API) preconfigured in the operating system. In addition, implementation logic (that is, a detection strategy included in the target function) of the target function may be determined based on an actual service scenario. This is not specifically limited in this embodiment.

In a possible example, the access permission of the first process is the same as the access permission corresponding to the memory segment to which the second address belongs. For example, both the access permission of the first process and the access permission corresponding to the memory segment to which the second address belongs are high permissions. The access permission of the second process is the same as the access permission corresponding to the memory segment to which the first address belongs. For example, both the access permission of the second process and the access permission corresponding to the memory segment to which the first address belongs are low permissions. In addition, the access permission of the first process is higher than the access permission of the second process.

Simply speaking, both the first process and the memory segment to which the second address belongs correspond to high permissions, and the second process and the memory segment to which the first address belongs correspond to low permissions. In this way, when the first process with the high permission accesses the first address corresponding to the low permission, even if the permission corresponding to the first address is not the same as the permission of the first process, the first process can normally access the first address, and does not need to undergo security detection, thereby reducing a quantity of times of performing security detection performed when a process accesses the shared memory cross permissions, and improving inter-process communication efficiency. When the second process with the low permission accesses the second address corresponding to the high permission, security detection needs to be performed on an access request of the second process, to avoid an illegal tampering behavior on the shared memory, ensure security of data in the shared memory, and improve process running reliability.

In addition, when the access permission corresponding to the memory segment accessed by the second process is lower than or equal to the access permission of the second process, the second process can implement normal access to the memory segment, and does not need to undergo security detection.

For example, in the foregoing method, the operating system may further obtain a third access request from the second process, where the third access request is used to request the first address in the shared memory. Because the access permission of the second process is equal to the access permission corresponding to the memory segment to which the first address belongs, the third access request can be executed in response to the access permission of the second process being not lower than the access permission corresponding to the memory segment to which the first address belongs.

For example, FIG. 4 is a diagram in which different processes access a shared memory according to an embodiment of this application. As shown in FIG. 4, the shared memory includes a first memory segment and a second memory segment, an access permission corresponding to the first memory segment is a low permission, and an access permission corresponding to the second memory segment is a high permission. In addition, the access permission of the first process is a high permission, and the access permission of the second process is a low permission.

Therefore, when the first process accesses the shared memory, because the access permission of the first process is higher than the access permission corresponding to the first memory segment, and the access permission of the first process is equal to the access permission corresponding to the second memory segment, the first process can normally access addresses in the first memory segment and the second memory segment.

When the second process accesses the shared memory, because the access permission of the second process is equal to the access permission corresponding to the first memory segment, the second process can normally access an address in the first memory segment. In addition, because the access permission of the second process is lower than the access permission corresponding to the second memory segment, when the second process requests to access an address in the second memory segment, security detection needs to be performed first, and the address in the second memory segment can be accessed only after the security detection succeeds.

The foregoing describes how the process accesses the shared memory in the shared memory access method provided in this embodiment. For ease of understanding, the following describes, with reference to a specific scenario, how to configure an access permission for a memory segment in a shared memory.

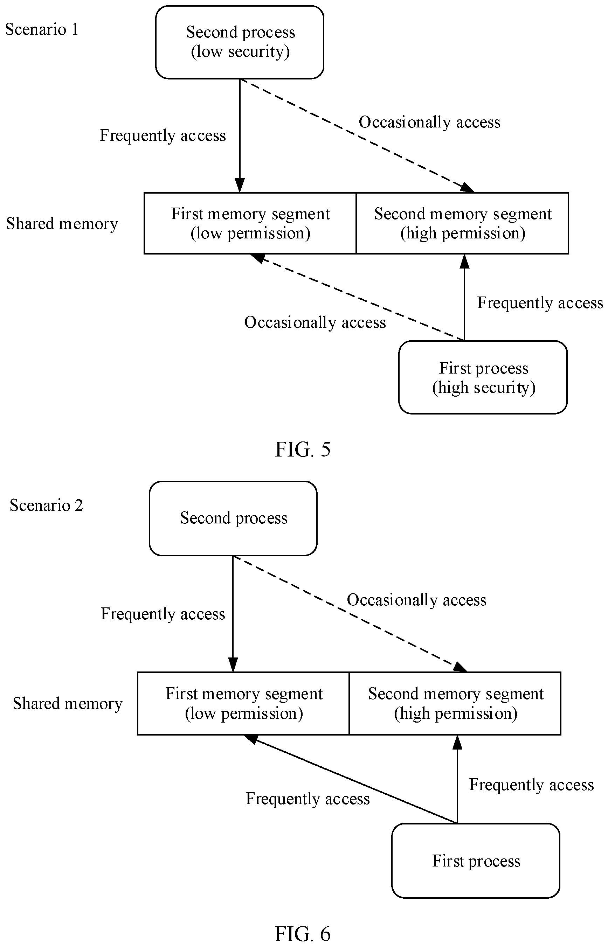

In a possible example, FIG. 5 is a diagram of configuring access permissions for different memory segments in a shared memory in a scenario according to an embodiment of this application. As shown in FIG. 5, in a scenario 1, in running procedures of a first process and a second process, the first process frequently accesses an address in a second memory segment, and occasionally accesses an address in a first memory segment. For example, in a procedure in which the first process accesses the shared memory, a quantity of times of accessing the address in the second memory segment accounts for 90% of a total quantity of times of accessing the shared memory, and a quantity of times of accessing the address in the first memory segment accounts for 10% of the total quantity of times of accessing the shared memory. The second process frequently accesses the address in the first memory segment, and occasionally accesses the address in the second memory segment. For example, in a procedure in which the second process accesses the shared memory, a quantity of times of accessing the address in the first memory segment accounts for 95% of a total quantity of times of accessing the shared memory, and a quantity of times of accessing the address in the second memory segment accounts for 5% of the total quantity of times of accessing the shared memory.

In addition, in the scenario 1, the first process is a process having high security, and the second process is a process having low security. That is, the first process has the high security, and is not likely to illegally tamper with the shared memory; and the second process has the low security, and is likely to tamper with the shared memory.

Therefore, in the scenario 1, an access permission corresponding to the second memory segment frequently accessed by the first process with the high security may be configured as a high permission, and an access permission of the first process is configured as a high permission, to ensure that the first process can normally access the address in the second memory segment, and does not need to undergo security detection. In addition, an access permission corresponding to the first memory segment frequently accessed by the second process with the low security is configured as a low permission, and an access permission of the second process is configured as a low permission, to ensure that the second process can normally access the address in the first memory segment.

Because the access permission of the first process is higher than the access permission corresponding to the first memory segment, the first process can also normally access the address in the first memory segment, and does not need to undergo security detection, thereby ensuring efficiency of occasionally accessing the first memory segment by the first process with the high security. Because the access permission of the second process is lower than the access permission corresponding to the second memory segment, when the second process accesses the address in the second memory segment, security detection needs to be performed, and the second memory segment can be accessed only after the security detection succeeds, thereby effectively ensuring security of data in the second memory segment.

In another possible example, FIG. 6 is a diagram of configuring access permissions for different memory segments in a shared memory in another scenario according to an embodiment of this application. As shown in FIG. 6, in a scenario 2, in running procedures of a first process and a second process, the first process frequently accesses an address in a first memory segment and accesses an address in a second memory segment. For example, in a procedure in which the first process accesses the shared memory, a quantity of times of accessing the address in the second memory segment accounts for 45% of a total quantity of times of accessing the shared memory, and a quantity of times of accessing the address in the first memory segment accounts for 55% of the total quantity of times of accessing the shared memory. The second process frequently accesses the address in the first memory segment, and occasionally accesses the address in the second memory segment. For example, in a procedure in which the second process accesses the shared memory, a quantity of times of accessing the address in the first memory segment accounts for 95% of a total quantity of times of accessing the shared memory, and a quantity of times of accessing the address in the second memory segment accounts for 5% of the total quantity of times of accessing the shared memory.

Therefore, in the scenario 1, an access permission corresponding to the second memory segment frequently accessed by the first process may be configured as a high permission, and an access permission of the first process is configured as a high permission, to ensure that the first process can normally access the address in the second memory segment, and does not need to undergo security detection. In addition, an access permission corresponding to the first memory segment frequently accessed by both the first process and the second process is configured as a low permission, and an access permission of the second process is configured as a low permission, to ensure that the second process can normally access the address in the first memory segment.

Because the access permission of the first process is higher than the access permission corresponding to the first memory segment, the first process can also normally access the address in the first memory segment, and does not need to undergo security detection, thereby ensuring efficiency of frequently accessing the first memory segment by the first process. Because the access permission of the second process is lower than the access permission corresponding to the second memory segment, when the second process occasionally accesses the address in the second memory segment, security detection needs to be performed, and the second memory segment can be accessed only after the security detection succeeds, thereby effectively ensuring security of data in the second memory segment.

The foregoing describes the manner of configuring the access permission of the memory segment in the shared memory and the access permissions of all the processes in some specific service scenarios. In an actual application, different configuration manners may be used based on an actual service scenario. This is not specifically limited in this embodiment.

It should be noted that the shared memory access method provided in this embodiment is described above by using an example in which the shared memory includes two memory segments (that is, the first memory segment and the second memory segment). In an actual application, the shared memory may also be divided into three or more memory segments having different access permissions. A quantity of memory segments included in the shared memory is not specifically limited in this embodiment. In addition, there may be one or more processes that are configured with a same access permission in an electronic device.

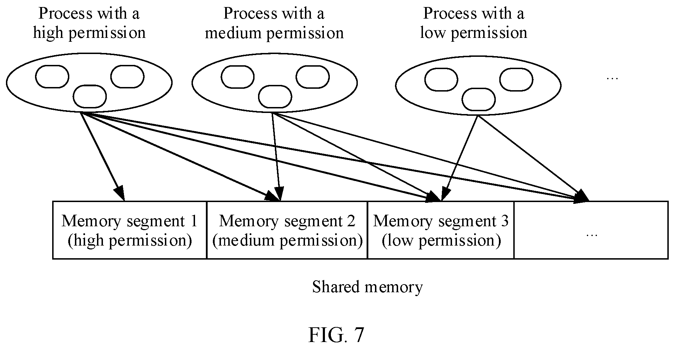

For example, FIG. 7 is a diagram of a memory segment in a shared memory according to an embodiment of this application. As shown in FIG. 7, the shared memory includes at least a memory segment 1, a memory segment 2, and a memory segment 3. In addition, an access permission corresponding to the memory segment 1 is a high permission, an access permission corresponding to the memory segment 2 is a medium permission, and an access permission corresponding to the memory segment 3 is a low permission. In addition, the shared memory may further include another memory segment whose corresponding access permission is lower than that of the memory segment 3. Details are not described herein again. In addition, in the scenario shown in FIG. 7, an electronic device includes one or more processes with a high access permission (that is, a process with a high permission), and the process with the high permission can normally access all memory segments in the shared memory. The electronic device includes one or more processes with a medium access permission (that is, a process with a medium permission). The process with the medium permission can normally access a memory segment other than the memory segment 1 in the shared memory. That is, security detection needs to be performed only when the process with the medium permission accesses the memory segment 1. The electronic device further includes one or more processes with a low access permission (that is, a process with a low permission). The process with the low permission can normally access a memory segment other than the memory segment 1 and the memory segment 2 in the shared memory, that is, security detection needs to be performed when the process with the low permission accesses the memory segment 1 and the memory segment 2.

In the foregoing embodiment, a procedure of determining, based on the access permission of the process and the access permission corresponding to the memory segment accessed by the process, whether the security detection needs to be performed on the access request sent by the process is described. For ease of understanding, the following describes how to implement a manner of determining an access permission of a process and an access permission corresponding to a memory segment accessed by the process.

In the embodiment shown in FIG. 3, after any one of the first access request and the second access request is obtained, a mapping relationship may be obtained, where the mapping relationship indicates a correspondence between a process and a memory segment in the shared memory. A target process in the mapping relationship is used as an example. The target process is any process recorded in the mapping relationship, and a target memory segment corresponding to the target process includes one or more memory segments whose corresponding access permission is not higher than an access permission of the target process. That is, the mapping relationship indicates correspondences between various processes that have been created in the electronic device and memory segments, and a memory segment corresponding to each process is a memory segment that can be normally accessed by the process. For any process, if the mapping relationship indicates that there is a correspondence between the process and a memory segment, it indicates that an access permission of the process is not lower than an access permission corresponding to the memory segment. Therefore, the process can normally access the memory segment, and does not need to undergo security detection. On the contrary, if the mapping relationship does not indicate that there is a correspondence between the process and a memory segment, it indicates that an access permission of the process is lower than an access permission corresponding to the memory segment. Therefore, the process can access the memory segment only after the security detection succeeds.

After the mapping relationship is obtained, it may be determined, based on the correspondence that is indicated in the mapping relationship and that is between the first process and the memory segment to which the first address belongs, that the access permission of the first process is not lower than the access permission corresponding to the memory segment to which the first address belongs; and based on the correspondence that is not indicated in the mapping relationship and that is between the second process and the memory segment to which the second address belongs, that the access permission of the second process is lower than the access permission corresponding to the memory segment to which the second address belongs.

Optionally, in the foregoing mapping relationship, a correspondence between the target process and the target memory segment is generated when the target process is created. That is, during running of the electronic device, each time the electronic device creates a process that needs to use the shared memory, a correspondence between the process and a memory segment is generated, so that a memory segment that is in the shared memory and that can be normally accessed by each process can be quickly determined subsequently. For example, in a procedure in which the electronic device creates the process, creation of the process may be implemented through a preconfigured interface. The interface can determine, based on a type of a process that needs to be created, a memory segment that can be normally accessed by the process, to generate a correspondence between the process and the memory segment, and allocate unused memory in the memory segment that can be normally accessed by the process, thereby implementing creation of the process.

Optionally, because a memory address to which the process is oriented is usually a virtual address, the foregoing mapping relationship may be specifically used to record a correspondence between a process and a virtual address segment, and there is a correspondence between the recorded virtual address segment and a memory segment in the shared memory.

Specifically, an address operated by the process (for example, an address indicated by the process in an access request) is usually a virtual address, and there is a correspondence between the virtual address and a physical address in the memory. When the access request initiated by the process is executed, the virtual address indicated in the access request usually needs to be translated into the physical address, so that an operation can be performed on data at a corresponding address in the memory. Because the address in the access request obtained from the process is the virtual address, in this embodiment, the correspondence between the virtual address segment and the memory segment in the shared memory is recorded in the mapping relationship, so that whether security detection needs to be performed on the access request of the process can be quickly determined based on the virtual address obtained from the access request, thereby improving efficiency of determining whether the security detection needs to be performed on the access request.

In this embodiment, there may be a plurality of storage locations of the mapping relationship.

Optionally, the foregoing mapping relationship may be recorded in a page table, that is, the mapping relationship is stored in the memory as a part of the page table. The page table is originally used to record a correspondence between a virtual address and a physical address in the shared memory. When the mapping relationship is recorded in the page table, the page table may be used to record the correspondence between the virtual address and the physical address in the shared memory and the correspondence between the process and the virtual address segment. For example, in the page table, for any virtual address corresponding to the shared memory, a physical address and a process that correspond to the virtual address may be recorded.

In this way, in a process of executing the access request, the page table needs to be queried to obtain the physical address corresponding to the virtual address in the access request. Therefore, the mapping relationship is recorded in the page table, and two types of information can be obtained by querying the page table once, that is, the physical address corresponding to the virtual address and whether the process has a permission to normally access the physical address corresponding to the virtual address, thereby improving efficiency of accessing the shared memory by the process. Specifically, after the virtual address in the access request is obtained, a process and a physical address that correspond to the virtual address may be found in the page table. If the process corresponding to the virtual address includes a process that generates the access request, it indicates that the current process has a permission to normally access the memory segment, security detection does not need to be performed, and the access request is executed based on the physical address corresponding to the virtual address; or if the process corresponding to the virtual address does not include a process that generates the access request, it indicates that the current process does not have a permission to normally access the memory segment, security detection needs to be performed, and after the security detection succeeds, the access request is executed based on the physical address corresponding to the virtual address.

Optionally, the foregoing mapping relationship may also be stored in a specific location in the memory, so that a component in an operating system quickly determines the access permission of the process and the access permission of the memory segment by accessing the memory.

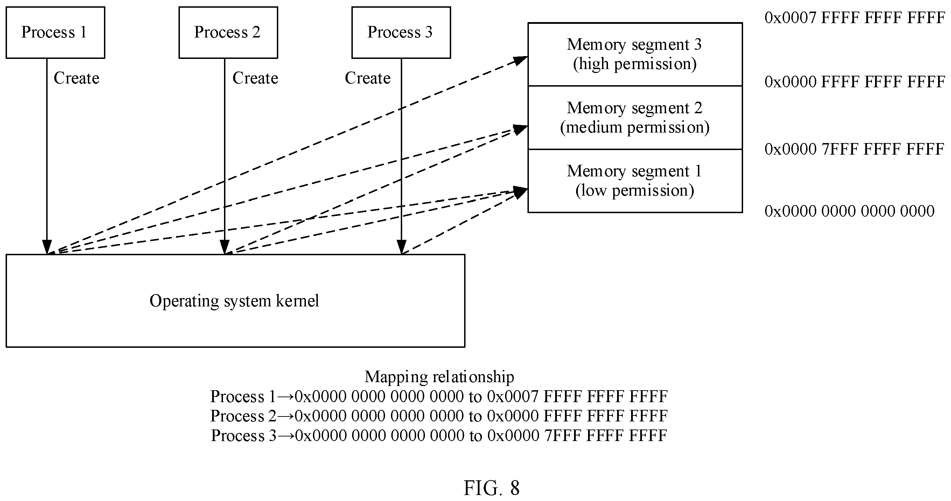

For example, FIG. 8 is a diagram of establishing a correspondence between a process and a virtual address segment according to an embodiment of this application. As shown in FIG. 8, mmap_base in a mm_struct structure of an operating system kernel can control a base address allocated to a virtual address. Therefore, a plurality of virtual address segments may be obtained through division by controlling the allocated base address of the virtual address, and each virtual address segment corresponds to one memory segment. For example, in FIG. 8, three virtual address segments may be obtained through division. A virtual address range of a 1^{st} virtual address segment is 0x0000 0000 0000 0000 to 0x0000 7FFF FFFF FFFF, a virtual address range of a 2^{nd} virtual address segment is 0x0000 7FFF FFFF FFFF to 0x0000 FFFF FFFF FFFF, and a virtual address range of a 3^{rd} virtual address segment is 0x0000 FFFF FFFF FFFF to 0x0007 FFFF FFFF FFFF. In addition, a physical address corresponding to a virtual address in the 1^{st} virtual address segment in the shared memory forms a memory segment 1, and an access permission corresponding to the memory segment 1 is a low permission; a physical address corresponding to a virtual address in the 2^{nd} virtual address segment in the shared memory forms a memory segment 2, and an access permission corresponding to the memory segment 2 is a medium permission; and a physical address corresponding to a virtual address in the 3^{rd} virtual address segment in the shared memory forms a memory segment 3, and an access permission corresponding to the memory segment 3 is a high permission. In this case, after a memory segment corresponding to each virtual address segment and an access permission corresponding to each memory segment are determined, an access permission corresponding to the virtual address segment may be determined, so that a correspondence between the process and a virtual address can be established based on the access permission of each process.

Specifically, when the operating system kernel creates a process 1, when the operating system kernel determines that an access permission of the process 1 is a high permission, the operating system kernel can determine that the process 1 can access the memory segment 1 to the memory segment 3 corresponding to the 1^{st} virtual address segment to the 3^{rd} virtual address segment, to record, in the mapping relationship, a correspondence between the process 1 and the 1^{st} virtual address segment to the 3^{rd} virtual address segment, that is, the process 1 corresponds to 0x0000 0000 0000 0000 to 0x0007 FFFF FFFF FFFF.

When the operating system kernel creates a process 2, when the operating system kernel determines that an access permission of the process 2 is a medium permission, the operating system kernel can determine that the process 2 can access the memory segment 1 and the memory segment 2 corresponding to the 1^{st} virtual address segment and the 2^{nd} virtual address segment, to record, in the mapping relationship, a correspondence between the process 2 and the 1^{st} virtual address segment to the 2^{nd} virtual address segment, that is, the process 2 corresponds to 0x0000 0000 0000 0000 to 0x0000 FFFF FFFF FFFF.

When the operating system kernel creates a process 3, when the operating system kernel determines that an access permission of the process 3 is a low permission, the operating system kernel can determine that the process 3 can access the memory segment 1 corresponding to the 1^{st} virtual address segment, to record, in the mapping relationship, a correspondence between the process 3 and 1^{st} virtual address segment, that is, the process 3 corresponds to 0x0000 0000 0000 0000 to 0x0000 7FFF FFFF FFFF.

The foregoing describes in detail the method provided in embodiments of this application. The following describes a device that is provided in embodiments of this application and that is configured to perform the foregoing methods.

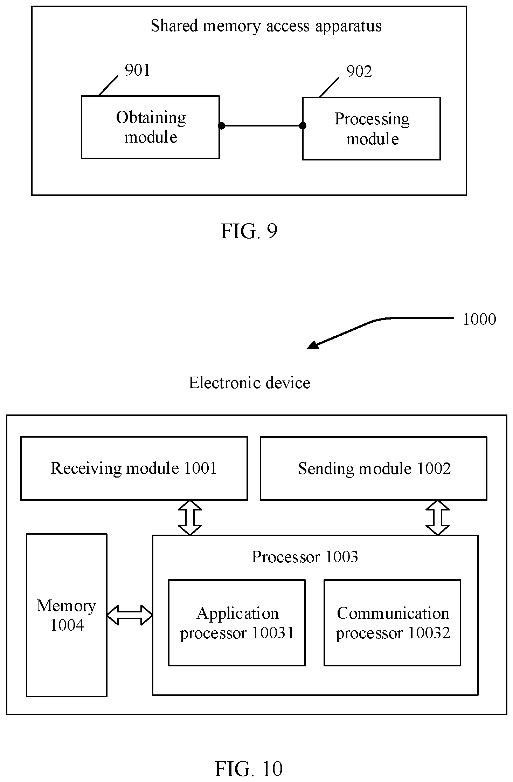

FIG. 9 is a diagram of a structure of a shared memory access apparatus according to an embodiment of this application. As shown in FIG. 9, the shared memory access apparatus includes: an obtaining module 901, configured to obtain a first access request from a first process and a second access request from a second process, where the first access request is used to request to access a first address in a shared memory, the second access request is used to request to access a second address in the shared memory, the shared memory includes a plurality of memory segments, and the plurality of memory segments respectively correspond to different access permissions; and a processing module 902, configured to execute the first access request in response to an access permission of the first process being not lower than an access permission corresponding to a memory segment to which the first address belongs; and the processing module 902 is further configured to perform security detection on the second access request in response to an access permission of the second process being lower than an access permission corresponding to a memory segment to which the second address belongs, to trigger execution of the second access request when the security detection on the second access request succeeds.

In a possible implementation, the access permission of the first process is the same as the access permission corresponding to the memory segment to which the second address belongs, the access permission of the second process is the same as the access permission corresponding to the memory segment to which the first address belongs, and the access permission of the first process is higher than the access permission of the second process.

In a possible implementation, the obtaining module 901 is further configured to obtain a third access request from the second process, where the third access request is used to request the first address in the shared memory; and the processing module 902 is further configured to execute the third access request in response to the access permission of the second process being not lower than the access permission corresponding to the memory segment to which the first address belongs.

In a possible implementation, the obtaining module 901 is further configured to obtain a mapping relationship, where the mapping relationship indicates a correspondence between a process and a memory segment in the shared memory, a target memory segment corresponding to a target process includes one or more memory segments whose corresponding access permission is not higher than an access permission of the target process, and the target process is any process recorded in the mapping relationship; and the processing module 902 is further configured to determine, based on the mapping relationship, that the access permission of the first process is not lower than the access permission corresponding to the memory segment to which the first address belongs and that the access permission of the second process is lower than the access permission corresponding to the memory segment to which the second address belongs.

In a possible implementation, in the mapping relationship, a correspondence between the target process and the target memory segment is generated when the target process is created.

In a possible implementation, the mapping relationship is specifically used to record a correspondence between a process and a virtual address segment, and there is a correspondence between the virtual address segment and a memory segment in the shared memory.

In a possible implementation, the mapping relationship is recorded in a page table, and the page table is used to record a correspondence between a virtual address and a physical address in the shared memory.

In a possible implementation, the processing module 902 is further configured to invoke a target function to perform the security detection on the second access request, where the target function is a preset function.

In a possible implementation, the processing module 902 is further configured to: when the security detection on the second access request succeeds, trigger execution of the second access request; or when the security detection on the second access request fails, reject execution of the second access request.

FIG. 10 is a diagram of a structure of an electronic device according to an embodiment of this application. As shown in FIG. 10, an electronic device 1000 may be specifically represented as a mobile phone, a tablet computer, a notebook computer, an intelligent wearable device, a server, or the like. This is not limited herein. Specifically, the electronic device 1000 includes a receiving module 1001, a sending module 1002, a processor 1003, and a memory 1004 (where there may be one or more processors 1003 in the electronic device 1000, and one processor is used as an example in FIG. 10). The processor 1003 may include an application processor 10031 and a communication processor 10032. In some embodiments of this application, the receiving module 1001, the sending module 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions for various operations.

The processor 1003 controls an operation of the electronic device. During specific application, various components of the electronic device are coupled together through a bus system. In addition to a data bus, the bus system may further include a power bus, a control bus, a status signal bus, and the like. However, for clear description, various types of buses in the figure are marked as the bus system.

The method disclosed in embodiments of this application is applied to the processor 1003, or may be implemented by the processor 1003. The processor 1003 may be an integrated circuit chip, and have a signal processing capability. In an implementation process, steps in the method can be implemented by using a hardware integrated logical circuit in the processor 1003, or by using instructions in a form of software. The processor 1003 may be a general-purpose processor, a digital signal processor (digital signal processor, DSP), a microprocessor, or a microcontroller. The processor 1003 may further include an application-specific integrated circuit (application-specific integrated circuit, ASIC), a field programmable gate array (field programmable gate array, FPGA) or another programmable logic device, a discrete gate or a transistor logic device, or a discrete hardware component.

The processor 1003 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor.

The receiving module 1001 may be configured to receive input digital or character information, and generate a signal input related to related settings and function control of the electronic device. The sending module 1002 may be configured to output digital or character information through a first interface. The sending module 1002 may be further configured to send instructions to a disk group through the first interface, to modify data in the disk group. The sending module 1002 may further include a display device, for example, a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

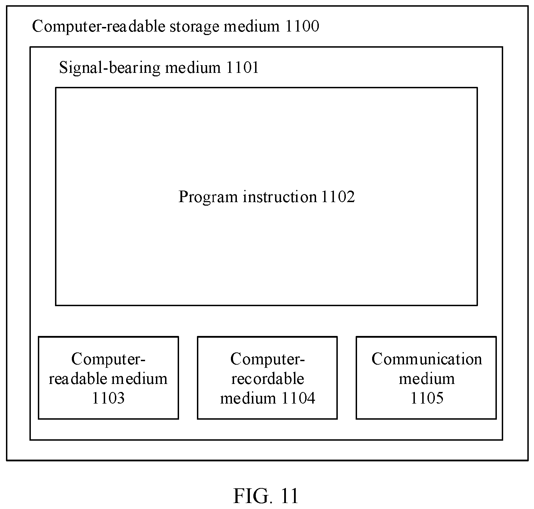

FIG. 11 is a diagram of a structure of a computer-readable storage medium according to an embodiment of this application. This application further provides a computer-readable storage medium. In some embodiments, the method disclosed in FIG. 3 may be implemented as computer program instructions encoded in a machine-readable format on the computer-readable storage medium or encoded in another non-transitory medium or product.

FIG. 11 schematically shows a conceptual partial view of an example computer-readable storage medium arranged according to at least some embodiments shown herein. The example computer-readable storage medium includes a computer program for executing a computer process on a compute device.

In an embodiment, the computer-readable storage medium 1100 is provided by using a signal-bearing medium 1101. The signal-bearing medium 1101 may include one or more program instructions 1102. When the one or more program instructions 1102 are run by one or more processors, the foregoing functions or a part of the foregoing functions described for FIG. 3 may be provided.

In some examples, the signal-bearing medium 1101 may include a computer-readable medium 1103, for example, but not limited to, a hard disk drive, a compact disc (CD), a digital video disc (DVD), a digital tape, a memory, a ROM, or a RAM.

In some implementations, the signal-bearing medium 1101 may include a computer-recordable medium 1104, for example but not limited to, a memory, a read/write (R/W) CD, an R/W DVD, or the like. In some implementations, the signal-bearing medium 1101 may include a communication medium 1105, for example but not limited to, digital and/or analog communication medium (for example, an optical fiber, a waveguide, a wired communication link, or a wireless communication link). Therefore, for example, the signal-bearing medium 1101 may be conveyed by the communication medium 1105 in a wireless form (for example, a wireless communication medium that complies with the IEEE 802.X standard or another transmission protocol).

The one or more program instructions 1102 may be, for example, one or more computer-executable instructions or one or more logic implementation instructions. In some examples, the compute device of the compute device may be configured to provide various operations, functions, or actions in response to the program instructions 1102 conveyed to the compute device by using one or more of the computer-readable medium 1103, the computer-recordable medium 1104, and/or the communication medium 1105.

In addition, it should be noted that the apparatus embodiments described above are merely examples. The units described as separate parts may or may not be physically separate, and parts displayed as units may or may not be physical units, to be specific, may be located at one place, or may be distributed on a plurality of network units. A part or all of the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or a part of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk, SSD)), or the like.

## Claims

1. A shared memory access method, comprising:
obtaining a first access request from a first process and a second access request from a second process, wherein the first access request is used to request to access a first address in a shared memory, the second access request is used to request to access a second address in the shared memory, the shared memory comprises a plurality of memory segments, and the plurality of memory segments respectively correspond to different access permissions;
executing the first access request in response to an access permission of the first process being not lower than an access permission corresponding to a memory segment to which the first address belongs; and
performing security detection on the second access request in response to an access permission of the second process being lower than an access permission corresponding to a memory segment to which the second address belongs, to trigger execution of the second access request when the security detection on the second access request succeeds.

2. The method according to claim 1, wherein the access permission of the first process is the same as the access permission corresponding to the memory segment to which the second address belongs, the access permission of the second process is the same as the access permission corresponding to the memory segment to which the first address belongs, and the access permission of the first process is higher than the access permission of the second process.

3. The method according to claim 1 or 2, wherein the method further comprises:
obtaining a third access request from the second process, wherein the third access request is used to request the first address in the shared memory; and
executing the third access request in response to the access permission of the second process being not lower than the access permission corresponding to the memory segment to which the first address belongs.

4. The method according to any one of claims 1 to 3, wherein the method further comprises:
obtaining a mapping relationship, wherein the mapping relationship indicates a correspondence between a process and a memory segment in the shared memory, a target memory segment corresponding to a target process comprises one or more memory segments whose corresponding access permission is not higher than an access permission of the target process, and the target process is any process recorded in the mapping relationship; and
determining, based on the mapping relationship, that the access permission of the first process is not lower than the access permission corresponding to the memory segment to which the first address belongs and that the access permission of the second process is lower than the access permission corresponding to the memory segment to which the second address belongs.

5. The method according to claim 4, wherein in the mapping relationship, a correspondence between the target process and the target memory segment is generated when the target process is created.

6. The method according to claim 4 or 5, wherein the mapping relationship is specifically used to record a correspondence between a process and a virtual address segment, and there is a correspondence between the virtual address segment and a memory segment in the shared memory.

7. The method according to any one of claims 4 to 6, wherein the mapping relationship is recorded in a page table, and the page table is used to record a correspondence between a virtual address and a physical address in the shared memory.

8. The method according to any one of claims 1 to 7, wherein performing the security detection on the second access request comprises:
invoking a target function to perform the security detection on the second access request, wherein the target function is a preset function.

9. The method according to any one of claims 1 to 8, wherein the method further comprises:
when the security detection on the second access request succeeds, triggering execution of the second access request; or
when the security detection on the second access request fails, rejecting execution of the second access request.

10. A shared memory access apparatus, comprising:
an obtaining module, configured to obtain a first access request from a first process and a second access request from a second process, wherein the first access request is used to request to access a first address in a shared memory, the second access request is used to request to access a second address in the shared memory, the shared memory comprises a plurality of memory segments, and the plurality of memory segments respectively correspond to different access permissions; and
a processing module, configured to execute the first access request in response to an access permission of the first process being not lower than an access permission corresponding to a memory segment to which the first address belongs; and
the processing module is further configured to perform security detection on the second access request in response to an access permission of the second process being lower than an access permission corresponding to a memory segment to which the second address belongs, to trigger execution of the second access request when the security detection on the second access request succeeds.

11. The apparatus according to claim 10, wherein the access permission of the first process is the same as the access permission corresponding to the memory segment to which the second address belongs, the access permission of the second process is the same as the access permission corresponding to the memory segment to which the first address belongs, and the access permission of the first process is higher than the access permission of the second process.

12. The apparatus according to claim 10 or 11, wherein
the obtaining module is further configured to obtain a third access request from the second process, wherein the third access request is used to request the first address in the shared memory; and
the processing module is further configured to execute the third access request in response to the access permission of the second process being not lower than the access permission corresponding to the memory segment to which the first address belongs.

13. The apparatus according to any one of claims 10 to 12, wherein
the obtaining module is further configured to obtain a mapping relationship, wherein the mapping relationship indicates a correspondence between a process and a memory segment in the shared memory, a target memory segment corresponding to a target process comprises one or more memory segments whose corresponding access permission is not higher than an access permission of the target process, and the target process is any process recorded in the mapping relationship; and
the processing module is further configured to determine, based on the mapping relationship, that the access permission of the first process is not lower than the access permission corresponding to the memory segment to which the first address belongs and that the access permission of the second process is lower than the access permission corresponding to the memory segment to which the second address belongs.

14. The apparatus according to claim 13, wherein in the mapping relationship, a correspondence between the target process and the target memory segment is generated when the target process is created.

15. The apparatus according to claim 13 or 14, wherein the mapping relationship is specifically used to record a correspondence between a process and a virtual address segment, and there is a correspondence between the virtual address segment and a memory segment in the shared memory.

16. The apparatus according to any one of claims 13 to 15, wherein the mapping relationship is recorded in a page table, and the page table is used to record a correspondence between a virtual address and a physical address in the shared memory.

17. The apparatus according to any one of claims 10 to 16, wherein the processing module is further configured to invoke a target function to perform the security detection on the second access request, wherein the target function is a preset function.

18. The apparatus according to any one of claims 10 to 17, wherein the processing module is further configured to:
when the security detection on the second access request succeeds, trigger execution of the second access request; or
when the security detection on the second access request fails, reject execution of the second access request.

19. A shared memory access apparatus, comprising a memory and a processor, wherein the memory stores code, the processor is configured to execute the code, and when the code is executed, the apparatus performs the method according to any one of claims 1 to 9.

20. A computer storage medium, wherein the computer storage medium stores instructions, and when the instructions are executed by a computer, the computer is enabled to implement the method according to any one of claims 1 to 9.
